# EUROPEAN PATENT APPLICATION

(11) **EP 1 094 402 A1**
(43) Date of publication of application: **25.04.2001**
(21) Application number: 99120088.2
(22) Date of filing: 20.10.1999
(51) Int. Cl.: G06F 17/21, G06F 17/27

(54) **Automatic document formatting method**

(71) Applicant: Sun Microsystems, Inc., Palo Alto, California 94303-4900 (US)
(72) Inventor: Breuer, Matthias, 21220 Seevetal (DE); Pingel, Jürgen, 21502 Geesthacht (DE)
(74) Representative: Betten & Resch

(57) **Abstract**

A method for automatically formatting a document in a computer system comprising a storage medium, wherein said storage medium comprises a plurality of formatting rules, wherein each of said formatting rules comprises at least one formatting rule specific identification feature and a formatting rule specific format, wherein each of said formatting rules shall be applied to a document portion if said document portion contains said at least one formatting rule specific identification feature, said method comprising the following steps:
a) identifying document portions in said document, wherein each of said document portions contains said at least one formatting rule specific identification feature for at least one of said formatting rules, thereby assigning at least one of said formatting rules to each of said document portions,
b) applying to each of said identified document portions said at least one of said formatting rules assigned to it,
c) displaying said applied formatting rules together with said identified document portions, and
d) accepting or rejecting each of said displayed formatting rules for each of said identified document portions according to user input.

Furthermore, a computer program for carrying out this method and a data carrier storing such a program are provided.

## Description

The present invention relates to a method for automatically formatting documents in a computer system.

Different types of documents are frequently formatted in a different way. For example letters, articles and books have normally a different layout, that means a different format. There are several possibilities to apply a certain format to a document. The easiest way is to give the different passages in the document a certain format during the creation of the document, for example headlines which shall be edited in a different type of characters. It is also possible to apply the format after the document has been created, that means to create the document in a standard format and to apply the final format after the document itself, for example the text, has been set out. There exist office applications which allow the user to employ an automatic formatting function for automatically formatting the document.

Such automatic formatting functions identify for each document portion, for example for each chapter of a text document, the required format and apply it. This identification of the format required for a certain document portion is effected with the help of one or more identification features which corresponds to a certain format, constituting a formatting rule. If a certain document portion includes the identification features for a specific formatting rule the corresponding format has been identified as the required format for this document portion. The connection between identification features and formats, the formatting rules, is laid down in an internal catalog of the computer system. The so identified required format may then be applied immediately to the corresponding document portion. Thereafter, the user has the possibility to accept all formatting actions, to reject all formatting actions or to see the formatting actions highlighted in the document and to accept or reject each formatting action individually by skipping through the document.

This kind of automatically formatting lacks efficiency. For example, if the formatting function has applied several different formatting rules and has applied some formatting rules repeatedly the user cannot reject the repeatedly applied formatting rule for all document portions to which it was applied in a single step. In order to reject this one formatting rule the user has to skip manually through the document and reject each formatting action corresponding to this formatting rule manually. Furthermore, prior art formatting is frequently not transparent enough, that means the user cannot easily follow or recognize the formatting actions of the automatic formatting function. This leads to additional controlling efforts or to insecurity of the user. That means the prior art automatic formatting functions frequently and in many respects do not meat consumer expectations.

It is an object of the present invention to provide a method for improved automatic formatting of a document. In particular, it is an object of the present invention to provide a method for easier accepting and rejecting formatting actions made by the automatic formatting function.

This and other objects are achieved by a method for automatically formatting a document in a computer system comprising a storage medium, wherein said storage medium comprises a plurality of formatting rules, wherein each of said formatting rules comprises at least one formatting rule specific identification feature and a formatting rule specific format. Herein, each of said formatting rules shall be applied to a document portion if said document portion contains said at least one formatting rule specific identification feature. The method according to the present invention comprises the following steps:
a) identifying document portions in said document, wherein each of said document portions contains said at least one formatting rule specific identification feature for at least one of said formatting rules, thereby assigning at least one of said formatting rules to each of said document portions,
b) applying to each of said identified document portions said at least one of said formatting rules assigned to it,
c) displaying said applied formatting rules together with said identified document portions, and
d) accepting or rejecting each of said displayed formatting rules for each of said identified document portions according to user input.

Documents are understood to be data files suitable for being stored and processed on computer systems in general, including text documents, spreadsheets, tables, pictures or any other set of data representing information. A computer system which is able to carry out the inventive method comprises a processor, a storage medium, an input device and an output device. The storage medium can be a hard disk, a floppy disk, a tape or anything comparable.

Formatting rules are understood to be rules for applying a certain format to a certain type of document portions, for example a headline layout to document portions which have been identified as being headlines. This identification is performed by means of one or more identification features per formatting rule for the presence of which each document portion has to be checked. Each identification feature contains specific particularities for a certain type of document portions. For example, a document portion of a text document will be identified as a headline, if the document portion fulfills the requirements of the headline identification feature, which are, for example, that the paragraph before this document portion and the paragraph behind this document portion are empty. In addition, this document portion must not end with a punctuation mark like a period, comma or semicolon. If, in this example, a document portion was identified to be a headline the formatting rule "headline", which is assigned to the identification features found in the headline document portion, is applied. That means the document portion identified as a headline is formatted like a "headline" should be formatted, for example with the font arial, with bold letters and underlined.

In the scope of the present invention the computer system, that means a software application running on the computer system, applies to the identified document portions the assigned one or more formatting rules, that means it formats these document portions accordingly. This formatting of the various document portions is done successively, that means document portion per document portion. It may be noted that this formatting technically is a re-formatting, because a format according to a formatting rule is applied to a document which naturally has some format, namely a standard format. Such a standard format document is considered to be unformatted in the scope of the present invention.

Each formatting action, that means each application of a formatting rule to a document portion, is listed in an internal table. In this internal table at least information about the applied formatting rules and about the document portions to which each of the formatting rules has been applied are stored. This table reflects the assignment of applied formatting rules to the document portions of the document. In the scope of the present invention the applied formatting rules are displayed on an output device, for example a monitor of the computer system, together with the identified document portions, that means the document portions to which these formatting rules have been applied. The display together allows, but does not require, a display in the same table or graphical window. It is possible and sufficient to display the formatting rules applied to a certain document portion in a window and to show this document portion in a second window, for example in a background window.

The display of the formatting rules together with the relevant document portions allows the user to accept or reject each formatting action, that means each application of a formatting rule to a document portion, by knowing the applied formatting rule from a displayed list. The accepting and rejecting can be effected simply by a mouse-click or, as well, by any other input device and operating scheme.

Step d) of the inventive method may be preceded by the further step of filtering said identified document portions according to at least one filtering criterion thereby selecting a group of identified document portions, wherein step d) shall be applied to said selected group of identified document portions. This step of filtering greatly simplifies the utilization of the automatic formatting function. The user can choose easily to accept or reject a certain kind of applied formatting rules, for example all formatting rules, and that means all formatting actions regarding headlines. The user is not forced any more to pick all headline formats one by one from the document and accept or reject them individually. The user does not even have to think about the question, in the headline example, whether a document portion is a headline or not. He can, instead, rely on the internal table or on the display which already list the headlines together with the applied formatting rules.

In another embodiment the present invention employs the applied formatting rule, the identified document portions in said document, the date of first application of said formatting rule to said identified document portions, or a combination thereof as a filtering criterion. In another embodiment of the invention the filter criterion can be defined arbitrarily by a user of the computer system. This filter criterion allows the user to adjust the computer application in a special way.

The method of the present invention may be implemented in a computer program, including comprehensive office applications such as the programs of Lotus, Microsoft and StarOffice. Such a computer program may be stored on any common data carrier like, for example, a floppy disk or a compact disk (CD), as well as on any common computer system's storage facilities like hard disks. Therefore, the present invention also relates to a data carrier for storing a computer program for carrying out the inventive method. The present invention also relates to a method for using a computer system for carrying out the presented inventive method. The present invention further relates to a computer system with a storage medium on which a computer program for carrying out the presented inventive method is stored.

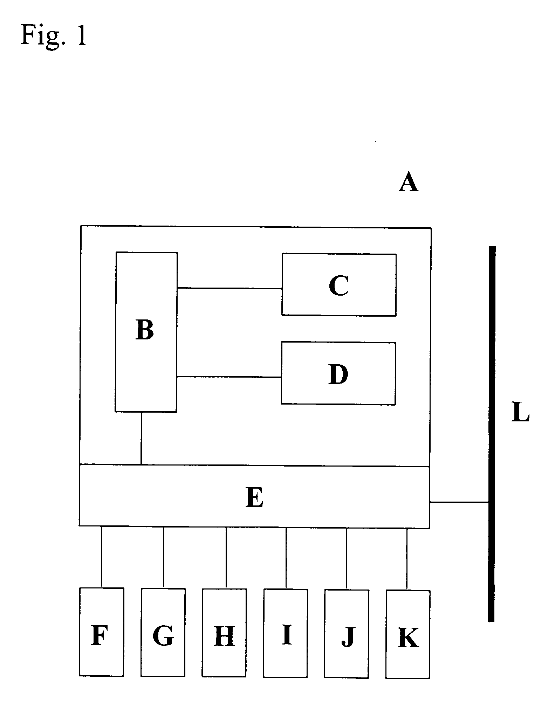

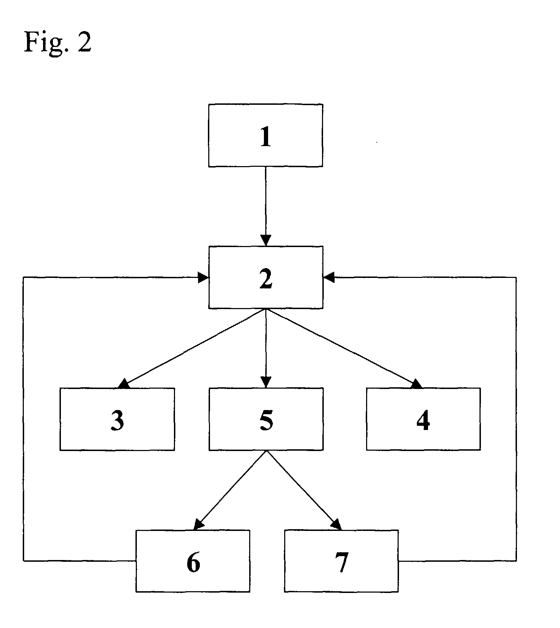

In the following, a preferred embodiment of the present invention is exemplary described along the figures 1 and 2, wherein the figures show:
- Fig. 1:: A diagram representing an example for a computer system being usable in the scope of the present invention.
- Fig. 2:: A flowchart representing the process of the automatic formatting function according to the present invention.

The method according to the present invention can for example be utilized for formatting an article for an scientific magazine in a computer system. This article contains, for example, headlines, lists and certain terms which should be highlighted in the article.

Fig. 1 shows a computer system A suitable to be used in the scope of the present invention. This computer system comprises a processor B, memories C, D and an i/o interface E. The memory of the computer system is divided in this example into a volatile memory C, like a working memory, and a non-volatile memory D, like a hard disk. Via the i/o interface E the computer system may, for example, be connected with input/output devices F to L. Common input/output devices are a keyboard F, a monitor G and a printer H. Other input devices like mouse I, scanner J and CD-ROM K are also possible. Frequently, the computer system is also connected to a network L via this i/o interface E.

For formatting for example a scientific article according to the present invention, a user writes, first of all, this article on the computer system A without giving any consideration to formats, that means the article is in the state of a standard format. The user intends to give his article a certain format after finishing the text of this article. For this purpose the user plans to employ a computer application according to the method of the present invention providing a function for automatically formatting a document. This computer application offers the user the possibility to choose if the automatic formatting function should be carried out during the creation of the document or at a certain point in time, may be after its completion. The user may chose, for example, the latter option. Therefore, after the user has finished his document the automatic formatting function applies its formatting rules.

Fig. 2 now shows the different steps of applying the automatic formatting function according to the present invention. In a first step 1 the formatting rules of the automatic formatting function are applied to the produced document, i.e. the scientific article. The application of the formatting rules leads to the result that all document portions where the paragraph before the document portion and the paragraph behind it are empty and where the document portion does not end with a punctuation mark like a period, comma or semicolon will be formatted in a certain "headline" format defined for the automatic formatting function. Analogously, each chapter beginning with a dash (-), a star (*), a plus sign (+) or a number and which is not identified as being a headline will be formatted as a list with enumeration or numbering according to a certain "list" format. If the user desires to highlight certain terms in the article he can require the computer application to highlight words starting with or consisting of a certain sequence of characters. It is also possible to use representative signs for identifying a word or sequence of characters which shall be formatted in a certain way, for example: if a word is surrounded by two stars without any space in-between, there might be a automatic formatting function which will format this word in bold letters. The stars will be suppressed.

After the computer application has carried out the automatic formatting function a window with a listing of all formatting actions will be created in a second step 2. This listing window can be, for example, in the foreground of the screen of a monitor, while the document itself is still present in a background window. In this listing window each formatting action is characterized by the name of the formatting action, by its user, by its date of application and by a short description of its nature or effect. In response to the user's choice this listing can be sorted in an alphabetic order by the name of the formatting action, by the name of the user or by the short description or in a chronological order by its date of application.

In this listing window created in step 2, the user can choose if he wants to accept all formatting actions by initiating the third step 3, if he wants to reject all formatting actions by initiating the fourth step 4 or if he wants to work on the individual formatting actions, represented by step 5.

In the latter case the user has the possibility to choose single changes made by the formatting function, represented by step 6, or to apply a filter function to the listed changes, represented by step 7.

If the user wants to work on a single change caused by the automatic formatting function he will employ the listing generated in step 2 and choose a change therefrom by employing an input device of the computer system, for example a mouse, in step 6. This causes the document portion corresponding to the chosen change to be highlighted in the document. This document portion is accordingly shown in the background window. The user may then accept, in step 3, or reject, in step 4, the chosen change.

The listing window provides also the possibility to filter all formatting actions depending on a certain filtering criterion. This filter action is represented in Fig. 1 by step 7. This criterion may be the date of creation of this document portion, the user who applied certain formatting rules to this document portion or the formatting rules or a combination thereof. Depending on the specification of the filtering criterion, a new listing is displayed in the listing window, according to step 2, showing only the formatting actions which fulfill the filtering criterion. This enables the user to accept, in step 3, or reject, in step 4, all formatting actions which fulfill the filtering criterion easily and quickly. But the user also has the possibility to choose again single changes made by the automatic formatting function in this new listing by highlighting them as described above in connection with step 6 or to filter the result of the new listing once more, in a second step 7, by employing another filter criterion.

The present invention, therefore, provides a method for easy, quick and flexible automatic formatting of documents.

## Claims

1. A method for automatically formatting a document in a computer system comprising a storage medium, wherein said storage medium comprises a plurality of formatting rules, wherein each of said formatting rules comprises at least one formatting rule specific identification feature and a formatting rule specific format, wherein each of said formatting rules shall be applied to a document portion if said document portion contains said at least one formatting rule specific identification feature, said method comprising the following steps:
a) identifying document portions in said document, wherein each of said document portions contains said at least one formatting rule specific identification feature for at least one of said formatting rules, thereby assigning at least one of said formatting rules to each of said document portions,
b) applying to each of said identified document portions said at least one of said formatting rules assigned to it,
c) displaying said applied formatting rules together with said identified document portions, and
d) accepting or rejecting each of said displayed formatting rules for each of said identified document portions according to user input.

2. A method according to claim 1, wherein step d) is preceded by the further step of filtering said identified document portions according to at least one filtering criterion thereby selecting a group of identified document portions and wherein step d) shall be applied to said selected group of identified document portions.

3. A method according to claim 2, wherein said filtering criterion is at least one of said applied formatting rules.

4. A method according to claim 2, wherein said filtering criterion is the position of said identified document portions in said document.

5. A method according to claim 2, wherein said filtering criterion is the date of first application of said formatting rules to said identified document portions.

6. A method according to any of claims 2 to 5, wherein said filter criterion can be defined arbitrarily by a user of said computer system.

7. A computer program for carrying out a method according to any of the preceding method claims on a computer system.

8. A data carrier for storing a computer program for carrying out a method according to any of the preceding method claims on a computer system.

9. A method for using a computer system for carrying out a method according to any of the preceding method claims.

10. A computer system comprising a storage medium on which a computer program for carrying out a method according to any of the preceding method claims is stored.
